# EUROPEAN PATENT SPECIFICATION

(11) **EP 2 379 278 B1**
(45) Date of publication and mention of the grant of the patent: **16.07.2014**
(21) Application number: 09793475.6
(22) Date of filing: 16.12.2009
(51) Int. Cl.: B23Q 11/00

(54) **MULTIFUNCTION ROBOTIZED MACHINE FOR THE MACHINING ON ANNULAR EDGES**
ROBOTORISIERTE MASCHINE ZUR MASCHINELLEN BEARBEITUNG VON RINGFÖRMIGEN RÄNDERN
MACHINE ROBOTISÉE MULTIFONCTIONS POUR USINAGE DE BORDS ANNULAIRES

(30) Priority: 19.12.2008 IT UD20080263
(43) Date of publication of application: 26.10.2011
(73) Proprietor: Chiarottin S.R.L., 33070 Maron di Brugnera (PN) (IT)
(72) Inventor: CHIAROTTIN, Marvi, I-33070 Maron di Brugnera (IT)
(74) Representative: D'Agostini, Giovanni
(86) International application number: PCT/EP2009/009016
(87) International publication number: WO 2010/078926

(56) References cited:
- EP-A1- 1 122 027
- WO-A1-02/094500
- DE-A1- 19 810 333
- DE-A1- 19 919 645
- DE-A1-102005 053 061
- GB-A- 2 307 431
- US-A- 4 998 442
- US-A1- 2007 199 187

## Description

### Technical Field

The present invention relates to a multifunction robotized machine for the machining on annular edges according to the characteristics of the pre-characterizing part of claim 1 (see, for example, DE 198 1033).

### Prior Art

The prior art solutions relative to multifunction robotized machines for the machining on annular edges, in general provide the movement of the workpiece with respect to the machine, said movement making necessary manual operations for the alignment of the workpiece with respect to the machine, the approaching of the workpiece, performing the machining and the successive removal of the workpiece from the machine in order to be able to successively repeat the same sequence on another workpiece.

The machining performed by the machine are essentially a successive series of different machining cycles including cutting a ring, surface finishing of the cutting surface and the successive execution of two series of holes, one series of holes comprising holes obtained in the radial direction, the other series of holes comprising holes obtained in the perpendicular direction with respect to the annular base.

DE1981033 discloses an arrangement or robot having a processing plane with mutually parallel longitudinal guides, a U-shaped gate raised above the processing plane, a drive unit for longitudinal gate movement, and a tool arm attached to a cross-bearing unit guided in a cross-guide for a carrying beam and in a vertical guide for the tool arm. A second drive unit is used for transverse motion of the cross-bearing unit, and a third drive for vertical movement of the tool arm in the cross-bearing unit and a rotary module unit attached to the tool arm. The rotary module unit has first and second rotary modules with mutually perpendicular axes and a tool carrier on the second rotary module.

US2007/199187 provides a base frame positioned below a horizontal axis; a pair of clamp units positioned at the two ends above the base frame; a pair of support units that horizontally support the long workpiece in two locations, and that are capable of moving vertically; and machining units that are capable of machining the long workpiece. The two clamp units are capable of moving from the outside toward the inside, which support the long workpiece in two locations and rotate around the horizontal axis in synchronization with each other.

WO 02/094500 refers to a work centre for machining parts in general, comprising at least one work unit equipped with means for machining the parts and further comprising support means for the parts, operatively associated with said work unit, wherein the work unit is movable along a first and a second axis of translation perpendicular to each other and about two axes of rotation, and wherein the work unit and the support means are movable in relative motion along a third axis of translation arranged orthogonally to the fourth axis.

EP 1122027 discloses a machining head which is drivable along a vertical axis and two horizontal axes with respect to a workpiece held on a workpiece-holding device, and which has, at progressively lower levels along said vertical axis, one or two high-speed spindles, one or two low-speed spindles and one or two feed-out spindles, all arranged at right angles to said vertical axis and driven by one or more motors mounted on the head. The machining head can bring the high-speed spindles to cooperate with a tool-changing magazine. The workpiece-holding device is adapted to carry two sets of workpieces on respective supports, and to shift said supports in succession between a working position near the head and a tool-changing position remote from the head.

DE19919645 discloses a clamping device separate from the spindle specially for a turning tool. The machine tool comprises a work piece support and a drilling and cutting head housing a rotary-driven spindle. The bottom end of the spindle includes a cavity for receiving a tool used to machine the work piece. The work piece support and drilling/cutting head can be moved spatially relative to each other. The work piece support is provided with a rotary mechanism in order to rotate a clamped work piece about an axis so that it can be machined using a turning tool.

GB 2307431 discloses a machine tool having a turret head which can be rotated to index one of tool mounting members into a machining position. It has a first supporting body which is connected to a moving mechanism that advances or retracts the turret head along an axis coinciding with the axis of the tool mounting member at the machining position. A second supporting body movable along the axis of machining is supported on the first supporting body, and the turret head is rotatably supported on the second supporting body for indexing. A spindle head is fixed to the first supporting body, and a spindle is supported on the spindle head. A tool holder to be held by the tool mounting member is engaged with or detached from the spindle by the movement of the second supporting body relative to the first supporting body.

### Problems of the Prior Art

The alignment and manual movement operations of the workpiece with respect to the machine involve a considerable waste of time which is not used for the machining in a narrow sense.

Moreover, said operations must necessarily occur slowly in order to avoid damages to the machine and due to the considerable mass of the pieces submitted to the machining which can have diameters even greater than 3 meters.

For example, this is the case of DE1981033 wherein it is necessary for the operator to position the workpiece on the work plane of the robot before starting the machining. Moreover the robot disclosed in DE1981033 can hardly be used for the combined operation of more than one tool because of the supporting structure of the tools, which will easily provide interferences between different simultaneously operating tools, this causing an increase in the processing time required in the case of complex machining to be performed on the workpiece.

Also concerning US2007/199187 different drawbacks are present, the main of which relates to the fact that both the workpiece supporting units and the workpiece clamp units operate on the same base frame, this causing the fact that the working machine will not be able to perform other machining on other workpieces until all the operations to be made on the current workpiece are terminated. If a problem on the workpiece occurs or if it is necessary to perform other types of machining which are non supported than the working machine must be stopped until the problem is solved or until the necessary additional machining are completed.

WO 02/094500, EP 1122027 and DE19919645 are conceived in such a way that also the workpieces are movable because they are fixed to supporting means which are movable according to a motion along a third translation axis. This solution presents important drawbacks in the case in which the workpieces are heavy, requiring therefore a considerable sizing of the control means of the workpieces supporting means. Moreover, particularly precise machining can be hardly performed due to the need to coordinate the movement and the position of the machining unit and of the supporting means.

The solution disclosed in GB 2307431 can be hardly adapted to support more than one independent working heads on the same tower, because the solution favors the presence of a single working head with tools which are selectable between different tools, but operating as an alternative. Therefore in the case of machining requiring more different works it will be necessary to wait for the end of the current machining performed by the tool in use, to wait for the replacing of the current tool by means of a commutation on the working head and to start the new machining. Therefore the working times will be particularly long in the case in which different machining must be performed on the same piece.

Also the machining performed by the prior art machines, in turn, are slow, besides causing also potential danger situations for the operators and the working machines. For example, concerning the case of the cutting operation of a ring starting from a high length cylinder, in the prior art machines, the cutting operation performed on the high length cylinder involves, when the separation of the ring having the desired size is completed, the free fall of the ring itself, with a consequent danger condition not only for the operators who should inadvertently be near the machine but also for the devices located in the working area and for the working machine itself, which could be subject to damages. Successively the operator will have to stop the machine and access the working area to manually remove the cut ring.

Moreover, the prior art machines provide only the possibility to perform cutting machining on the workpiece, while other types of machining, e.g. the grinding, are not possible because of the impossibility to support working heads supporting a greater stress as in case of the grinder heads, said grinding operations allowing to obtain better results from the point of view of the final finishing of the material and of the precision of the machining itself.

Moreover, the prior art machines badly adapt to the needs introduced by the new technologies which require the execution of holes which are not perfectly perpendicular with respect to the annular base, but inclined by about +/- 10 degrees or more, besides cutting and finishing machining on inclined planes.

### Aim of the Invention

The aim of this invention is to provide a multifunction robotized machine for the machining on annular edges which allows a shortening of the machining times allowing at the same time to obtain better safety operative conditions and the improvement of the characteristics of the performed machining, in addition to the possibility to easily perform also a series of holes not perfectly perpendicular with respect to the annular base and cutting and finishing machining on inclined planes.

### Concept of the Invention

The aim is reached with the characteristics of claim 1. The dependent claims represent advantageous solutions.

### Advantageous Effects of the Invention

The solution according to the present invention, by the considerable creative contribution the effect of which constitutes an immediate and not negligible technical progress, presents advantages both from the point of view of the machining times which are advantageously reduced by more than 50 % with respect to the prior art machines in addition to the possibility perform machining on inclined planes.

### Description of the Drawings

A practical embodiment is described hereafter with reference to the included drawings to be considered as a non-limitative example of the present invention in which:
Fig. 1 represents a front view of the multifunction robotized machine for the machining on annular edges made according to the present invention.
Fig. 2 represents a side-view of the multifunction robotized machine for the machining on annular edges made according to the present invention.
Fig. 3 represents a rear-view of the multifunction robotized machine for the machining on annular edges made according to the present invention.
Fig. 4 represents a plan view of the multifunction robotized machine for the machining on annular edges made according to the present invention.
Fig. 5 represents a three-dimensional view of the multifunction robotized machine for the machining on annular edges made according to the present invention.
Fig. 6 represents a three-dimensional view of the tools-holding arm of the multifunction robotized machine for the machining on annular edges made according to the present invention.
Fig. 7 represents a side-view of the tools-holding arm of the multifunction robotized machine for the machining on annular edges made according to the present invention.
Fig. 8 illustrates the operation of some types of tools which can be used to perform machining by means of the multifunction robotized machine for the machining on annular edges made according to the present invention in the case of two examples of workpieces having different diameters.
Fig. 9 represents a plan view of the tools-holding arm of the multifunction robotized machine for the machining on annular edges made according to the present invention.
Fig. 10 represents a sectional view of the tools-holding arm of figure 9 according to the section line indicated with A-A in figure 9.
Fig. 11 represents a bottom view of the tools-holding arm of figure 9 with the lower cover removed to allow the view of the arrangement of the internal components.
Fig. 12 represents a view showing the operation of the multifunction robotized machine for the machining on annular edges made according to the present invention on different working stations.
Figs. 13-14 schematically illustrate the operation of the suction system.

### Description of the Invention

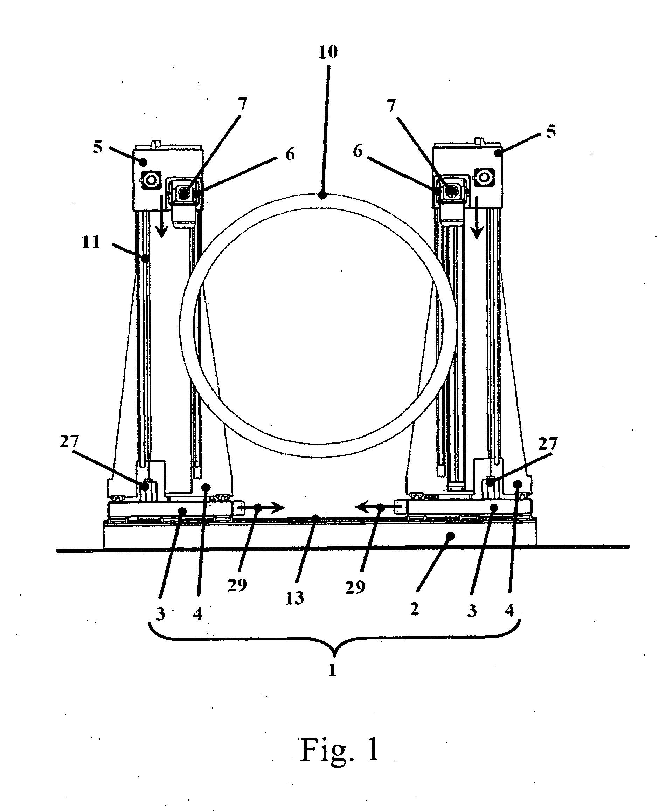

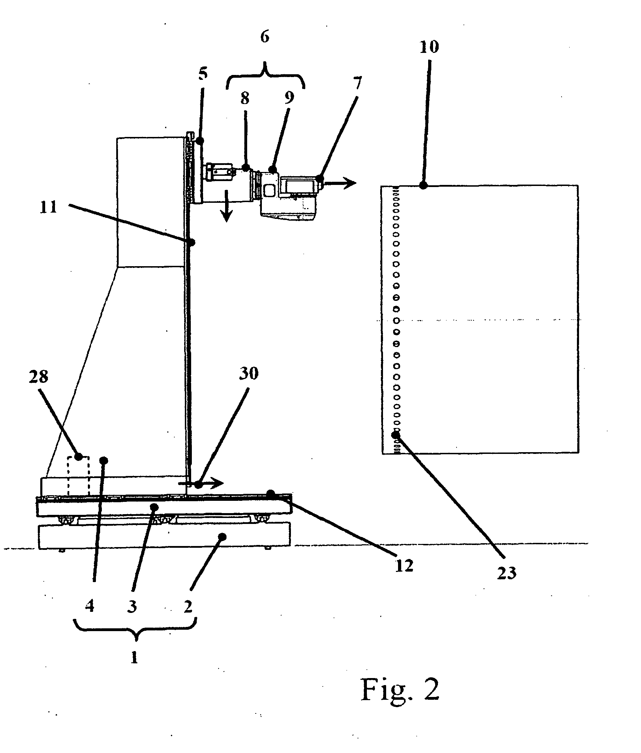

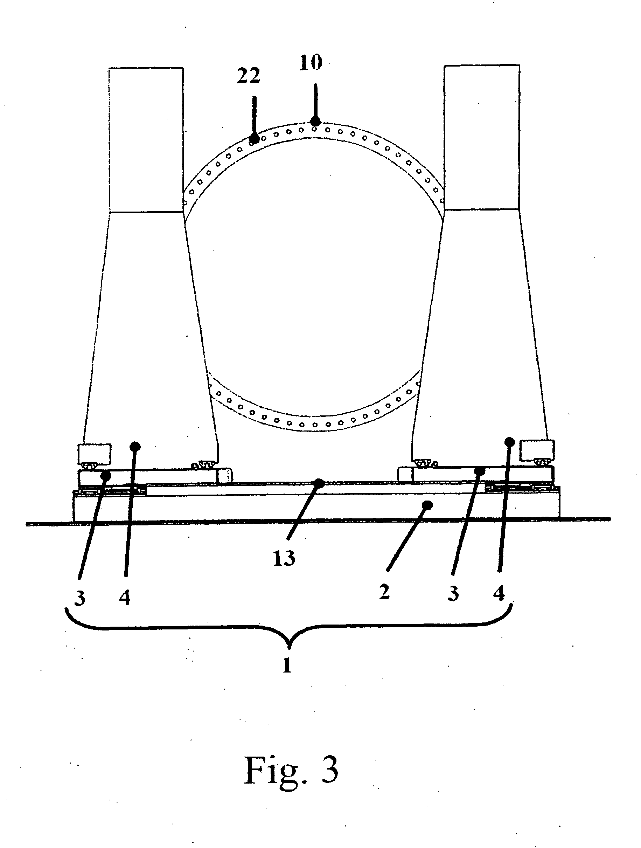

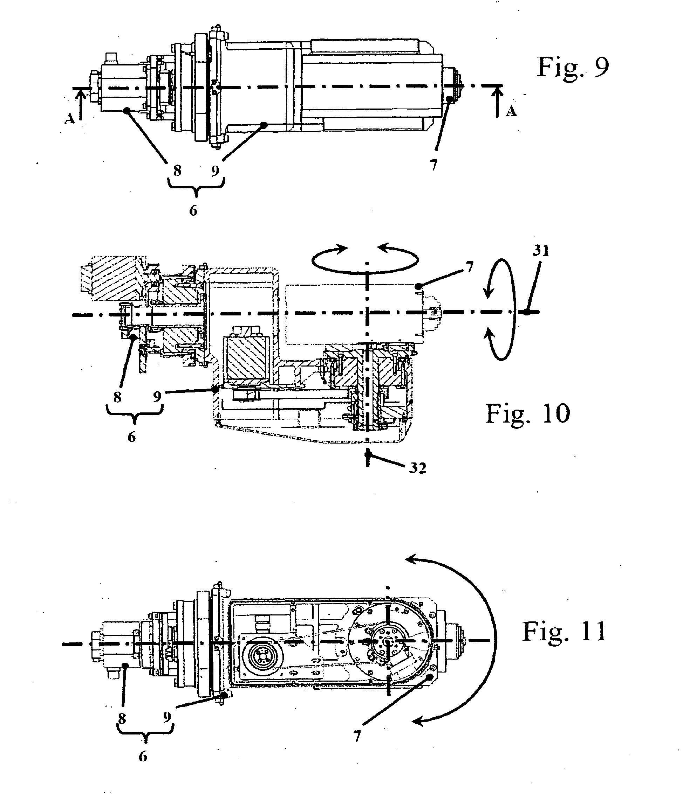

The robotized multifunction machine (1) for the machining on annular edges made according to the present invention includes (Figs. 1 to 5 and Fig. 10) a basement (2) including on the upper part first guiding means (13) able to guide the movement of at least one base (3) in a first direction (29) on a horizontal plane with respect to said basement (2), more than one base (3) being possibly provided each of which having an independent movement with respect to the other ones, each base including corresponding driving means (27) of the base, each of said bases (3) including on the upper part second guiding means (12) able to guide the movement of a vertical tower (4) in a second direction (30) on a horizontal-plane with respect to said basement (2), said second direction being orthogonal with respect to said first direction, each of said vertical towers (4) including driving means (28) of the tower, the movement of each vertical tower (4) being independent with respect to the movement of the possible other vertical tower, each vertical tower (4) including frontally with respect to a workpiece (10) vertical guiding means (11) able to guide the movement of at least one arm-holding plate (5), each arm-holding plate (5) including driving means (16) of the arm-holding plate, the movement of each arm-holding plate (5) being independent with respect to the movement of the other arm-holding plates (5), each arm-holding plate (5) bearing a tool-holding arm (6), said tool-holding arm (6) including a forearm (8) integral with said arm-holding plate (5) and a head (9) supported by said forearm (8), said head (9) being rotary with respect to said forearm (8) according to a first rotation axis (31), said forearm including rotation means (17) of the head, said head (9) bearing a toolholder (7), said toolholder (7) being rotary with respect to said head (9) according to a second rotation axis (32), said second rotation axis (32) being orthogonal with respect to said first rotation axis (31), said head (9) including rotation means (18) of the toolholder, the assembly of said forearm (8), of said head (9) and of said toolholder (7) constituting tool-holder arm with 2 polar axes, one polar axis corresponding to the rotation of said head (9) with respect to said forearm (8), the other polar axis corresponding to the rotation of said toolholder (7) with respect to said head (9).

It should be noted that, although in the illustrated embodiment reference is made to a configuration with two vertical towers (4) supported by two corresponding bases (3), the machine (1) according to the present invention can comprise, in a simpler solution, only one vertical tower (4) supported by only one corresponding base (3), said configuration also benefiting from the advantages deriving from the application of the present invention. The illustrated embodiment having two vertical towers (4) supported by two corresponding bases (3) is however more advantageous on the bases of the needed machining time, as it will be apparent to those skilled in the art of the sector upon the reading the reading of the present description.

Moreover, it should be noted that although in the illustrated embodiment reference is made to a configuration with two vertical towers (4) supported by two corresponding bases (3), the machine (1) according to the present invention can comprise, in a more complex solution, more than two vertical towers (4) each of which supported by a corresponding base (3), the number of the bases corresponding to the number of the vertical towers. As it will be apparent to those skilled in the art of the sector in view of the present description the choice of the number of vertical towers and corresponding bases is not limitative for the aims of the present invention, but it essentially depends on an economic evaluation of the ratio between the saved time obtained by means of the use of a greater number of vertical towers, that is the number of machining required on the workpiece and the size of the same, with respect to the additional cost of said configurations with a greater number of towers.

In the following of the present description reference will be made to the configuration with two vertical towers (4) supported by two corresponding bases (3), the extension and the advantages coming from the other configurations being obvious to the ones skilled in the art in view of the following description.

In particular (Figs. 1 to 5) the basement (2) includes on the upper part first guiding means (13) or rails which together with said driving means (27) of the bases, in the form of engines, form a rackwork movement system which allows the movement of at least two bases (3) in a first direction (29) on a horizontal-plane with respect to said basement (2). The bases (3) are independently movable the one with respect to the other.

Each base (3), in turn, includes on the upper part second guiding means (12) or rails which together with said driving means (28) of the tower form a rackwork movement system which allows the movement of said towers (4) in a second direction (30) on a horizontal-plane with respect to said basement (2), said second direction being orthogonal with respect to said first direction (29). Each of said vertical towers (4) is independently movable with respect to the movement of the other vertical tower.

Each vertical tower (4) includes, in turn, frontally with respect to a workpiece (10), vertical guiding means (11) or rails which together with said driving means (16) of the arm-holding plate form a rackwork movement system which allows the movement of said arm-holding plate.

Each tower comprises more than one arm-holding plate (5), each of which bearing a corresponding tool-holding arm (6). Each of the arm-holding plates (5) mounted on the same vertical tower (4) is independently movable from the others arm-holding plates (5) mounted on the same vertical tower (4).

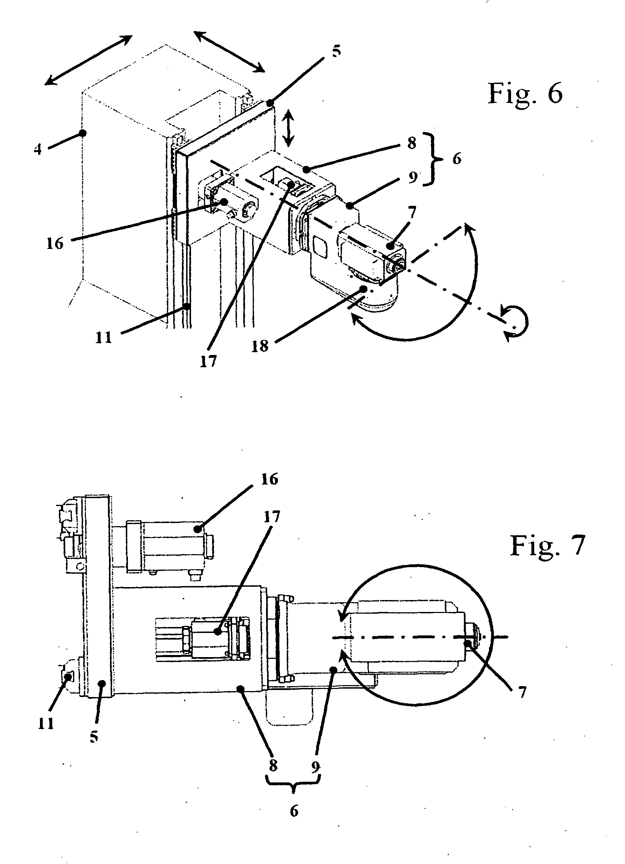

The tool-holding arm (6) includes (Figs. 6, 7, 9, 10, 11) a forearm (8) integral with said arm-holding plate (5) and a head (9) supported by said forearm (8), said head (9) being rotary with respect to said forearm (8) according to a first rotation axis (31), said forearm including rotation means (17) of the head, said head (9) bearing a toolholder (7), said toolholder (7) being rotary with respect to said head (9) according to a second rotation axis (32), said second rotation axis (32) being orthogonal with respect to said first rotation axis (31), said head (9) including rotation means (18) of the toolholder. In practice the assembly of said forearm (8), of said head (9) and of said toolholder (7) constitutes a tool-holder arm with 2 polar axes, one polar axis corresponding to the rotation of said head (9) with respect to said forearm (8), the other polar axis corresponding to the rotation of said toolholder (7) with respect to said head (9) so that machining is allowed also on inclined planes of the workpiece (10).

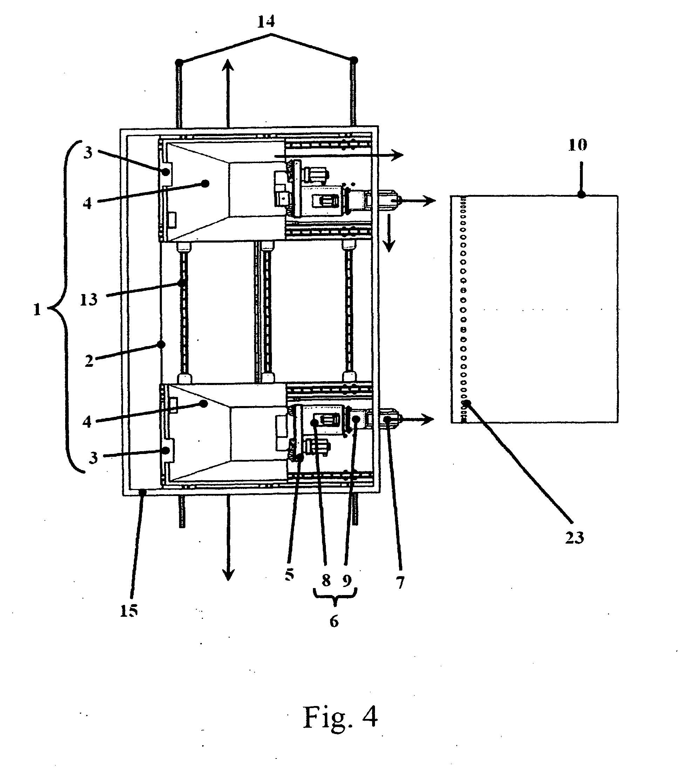

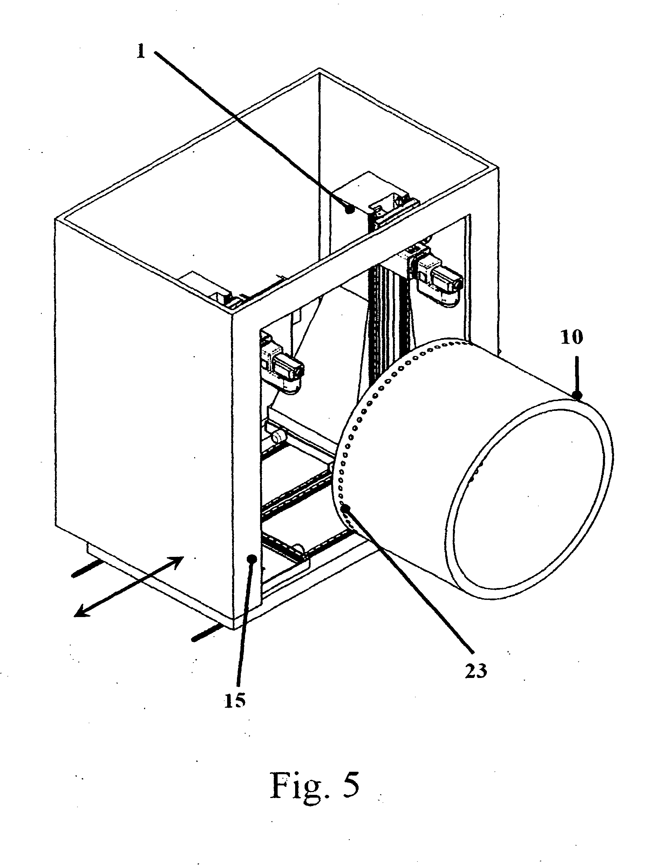

In the preferred solution of the invention the machine as a whole includes (Figs. 4 and 5) also a protection (5) intended to prevent the access to machine during the machining operations, intended for the protection of the machine as well as for the noise reduction of the noise produced by the machine itself and to prevent the dispersion in the surrounding environment of particles coming from the machining.

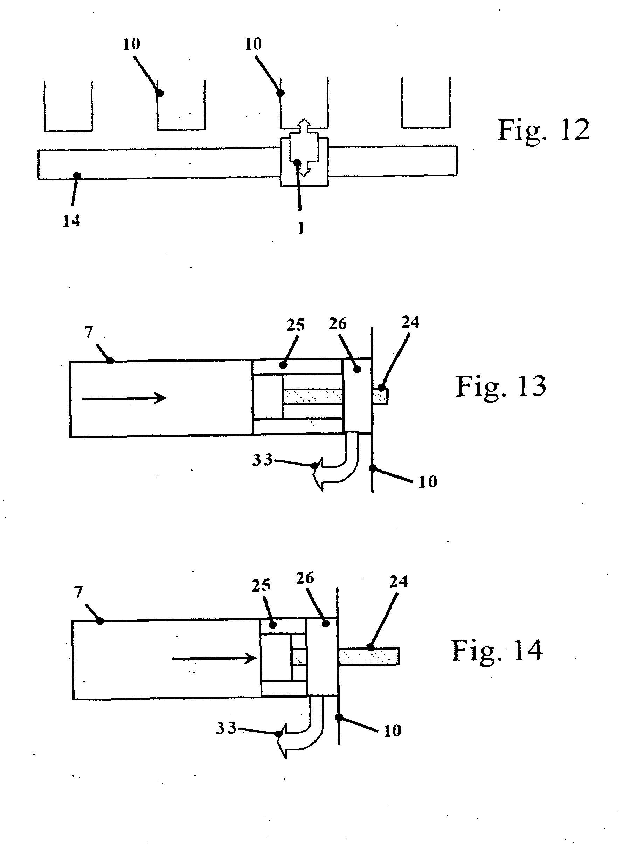

Moreover the machine (1) according to the present invention, unlike the prior art machines, can be advantageously moved between different working positions (Fig. 12) shifting the basement (2) along guiding means of the machine or movement rails of the machine. This allows to use the same machine on another different workstation with respect to the one at which the previous machining is just ended, in order to be able perform other machining on another workpiece (10) while the previously machined part is removed. In this way an advantageous reduction of the total machining times is obtained, although operating with the same machine, avoiding the dead times relative to the movement of the workpieces which are long per se and require a certain caution. Moreover, the departure of the machine with respect to the machined part, allows a greater protection of the machine during the movement operations of the workpieces.

Moreover the fact that the toolholders (7) are mounted on towers which are movable according to said first and second direction, allows the machine itself to perform the movement operations with respect to the workpiece to perform both the approaching of the tools and the alignment with respect to the workpiece (10), unlike the prior art techniques, with consequent advantages both in terms of safety for the machine and in terms of movement times themselves.

Moreover, excluding the workpiece to be approached to the machine, but being the machine to be approached to it, an effective support of the workpiece itself can be provided, this avoiding low safety conditions which could cause the falling of part of the workpiece during the cutting of an annular segment from an annular segment having a greater length. In addition to a greater safety for the operators also the safeguard of the machine is improved, with a lower damage risk for the machine and/or for the workpiece.

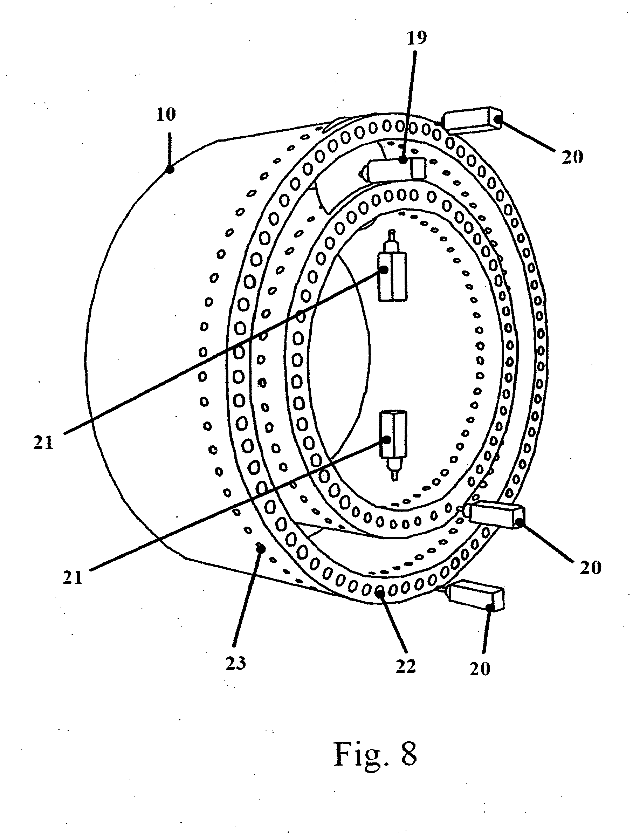

The toolholders (7) can support (Fig. 8) different working tools, as, by way of example only, cutting tools (19) intended for the cutting of the workpiece (10), axial borehole tools (20) intended for the execution of axial holes (22), radial borehole tools (21) intended for the execution of radial holes (23), surface finishing tools, etc.

Moreover, advantageously and differently with respect to the prior art machines, the machine according to the present invention also allows the use of grinder heads, because the structure of the machine and of the relative toolholders (7) supports greater strains and stresses. The possibility to use also grinder heads in turn allows to obtain better results from the point of view of the material final finishing and precision of the machining itself.

With reference to the machining performed by means of said tools, all of said operations can be performed on inclined planes. For example, in the case of the radial holes (23), they can also be inclined with respect to the perfectly radial direction. For example, in the case of the axial holes (22) they can also be inclined with respect to the plane of the surface of the worked material (10) on which said holes are obtained. This occurs due to the presence of the rotational axis of the elements forming the tool-holding arm (6) and, unlike the prior art machines, it allows machining corresponding, by way of example only, to the needs introduced by the new technologies relative to the construction of wind blades specifically designed for conditions in which the wind is weak and which require the blades to be twisted and bent.

In the illustrated embodiment the working plane of each of said machining on inclined planes can have any inclination between +/- 90 degrees with respect to the plane of the work material subject to said machining, this being particularly advantageous for the type of machining which can be performed by the machine according to the present invention which are higher than the machining which can be performed by the prior art machines. This advantageously means that, if it is more advantageous from the point of view of the machining to be performed on the piece itself, also the workpiece can be placed in an inclined condition with respect to the machine, the machine being able to perform said machining also on workpieces placed in an inclined position with respect to the machine according to any inclination plane within +/-90 degrees with respect to the plane of the machine.

Advantageously (Figs. 13 and 14) the toolholders (7) include a suction chamber (26), said suction chamber lying on the surface of the workpiece (10) before the tool (24) starts to perform its machining and keeping said contact condition for the whole time of the machining, the toolholder being movable on guides (25) with respect to said suction chamber (26). In this way the particles coming from the machining performed by the tool (24) are prevented to be dispersed in the surrounding environment. The suctions (33) occurs by means of suction means (not represented) integrated in the machine and connected by means of flexible ducts (not represented).

Advantageously (as schematically represented in Fig. 8) the machine according to the present invention can accommodate more than one axial borehole tools (20) intended to perform axial holes (22) and more than one radial borehole tools (21) intended to perform radial holes (23) besides more than one cutting tools (19) simultaneously operating, this involving further benefits from the point of view of the reduction of the total machining time. In the preferred embodiment of the present invention the machine will include 4 axial borehole tools (20), 4 radial borehole tools (21) and at least one cutting tool (19).

The multifunction robotized machine for the machining on annular edges according to the present invention can be advantageously associated to a numerical control system (not represented) with a respective management program of the movement and of the programmed machining operations according to a predetermined machining program of said workpiece intended to control the movement of the machine between different working stations, if provided, the movement of said bases (3), the movement of said vertical towers (4), the movement of said arm-holding plate (5) and the movement of the axes of said toolholder (7) arm.

The description of this invention has been made with reference to the enclosed figures showing a preferred embodiment of the invention itself, but it is evident that many alterations, modifications and variations will be apparent to those skilled in the art in light of the foregoing description. Thus, it should be understood that the invention is not limited by the foregoing description, but it embraces all such alterations, modifications and variations defined in the appended claims.

### Used nomenclature

With reference to the identification numbers reported in the enclosed figures, the following nomenclature has been used:
1. Multifunction robotized machine
2. Basement
3. Tower-carrier base
4. Tower
5. Arm-holding plate
6. Tools-holding arm
7. Toolholder
8. Forearm
9. Head
10. Workpiece
11. Vertical guiding means or vertical tracks
12. Second guiding means or tower movement tracks
13. First guiding means or base movement tracks
14. Machine guiding means or machine movement tracks
15. Protection
16. Driving means of the arm-holding plate
17. Rotation means of the head
18. Rotation means of the toolholder
19. Cutting tool
20. Axial borehole tool
21. Radial borehole tool
22. Axial hole
23. Radial hole
24. Tool
25. Guide
26. Suction chamber
27. Driving means of the base
28. Driving means of the tower
29. First direction
30. Second direction
31. First polar axis
32. Second polar axis
33. Suction

## Claims

1. Multifunction robotized machine for the machining on annular edges by means of tools supported by tool-holding means and including a basement (2) including on the upper part first guiding means (13) able to guide the movement of at least one base (3) in a first direction (29) on a horizontal-plane with respect to said basement (2), each of said bases (3) including corresponding driving means (27) of the base, the driving means of each base being independent with respect to the driving means of the other bases, each of said bases (3) including on the upper part second guiding means (12) able to guide the movement of a vertical tower (4) in a second direction (30) on a horizontal-plane with respect to said basement (2), said second direction being orthogonal with respect to said first direction, each of said vertical towers (4) including driving means (28) of the tower, the driving means of each tower being independent with respect to the driving means of the other towers, each vertical tower (4) including, frontally with respect to a work-piece (10), vertical guiding means (11) able to guide the movement of at least one arm-holding plate (5), each arm-holding plate (5) including driving means (16) of the arm-holding plate, the driving means of each arm-holding plate (5) being independent with respect to the driving means of the other arm-holding plates (5), each arm-holding plate (5) bearing a tool-holding arm (6), said tool-holding arm (6) including a forearm (8) integral with said arm-holding plate (5) and a head (9) supported by said forearm (8), said head (9) being rotary with respect to said forearm (8) according to a first rotation axis (31), said forearm (8) including rotation means (17) of the head, said head (9) bearing a toolholder (7), said toolholder (7) being rotary with respect to said head (9) according to a second rotation axis (32), said second rotation axis (32) being orthogonal with respect to said first rotation axis (31), said head (9) including rotation means (18) of the toolholder, the assembly of said forearm (8), of said head (9) and of said toolholder (7) constituting a tool-holder arm with 2 polar axes, one polar axis corresponding to the rotation of said head (9) with respect to said forearm (8), the other polar axis corresponding to the rotation of said toolholder (7) with respect to said head (9), and **characterized in that**:
- Said bases (3) are two, each of said bases (3) including corresponding driving means (27) of the base, the driving means of each base being independent with respect to the driving means of the other base, each of said bases (3) including on the upper part second guiding means (12) able to guide the movement of a vertical tower (4), the driving means of one vertical tower being independent with respect to the driving means of the other vertical tower.
- Said machine includes driving means of said machine (1) between different workstations.
- Said driving means (27) of the base and said first guiding means (13) are a rackwork system and/or **in that** said driving means (28) of the tower and said second guiding means (12) are a rackwork system.
- Said driving means (16) of the arm-holding plate and said vertical guiding means (11) are a rackwork system.
- Said toolholder (7) includes a suction chamber (26), said suction chamber is capable of lying on the surface of the workpiece (10) before a tool (24) starts to perform a corresponding machining on said workpiece (10), the toolholder (7) being movable on guides (25) with respect to said suction chamber (26), the contact between said suction chamber (26) and said surface of the workpiece (10) being kept for the whole duration of said machining;
- and **in that** each tool-holding arm (6) works on a working plane inclined at a certain angle with respect to a corresponding machining-plane of the workpiece, said angle is between +/- 90 degrees;
- each of said towers comprises more than one of said arm-holding plates (5), each of which bearing a corresponding of said tool-holding arm (6), each of said arm-holding plates (5) mounted on the same vertical tower (4) being independently movable from the other arm-holding plates (5) mounted on the same vertical tower (4);
- the machine accomodates simultaneously operating tools, said simultaneously operating tools being more than one axial borehole tools (20) intended to perform axial holes (22) and more than one radial borehole tools (21) intended to perform radial holes (23) besides more than one cutting tool (19) and grinder head;
- and workpieces can be placed in an inclined position with respect to the machine according to any inclination plane within +/- 90 degrees with respect to the plane of the machine.

2. Multifunction robotized machine for the machining on annular edges according to claim 1 **characterised in that** it is associated to a computerized numeric control system with corresponding program for the management of the movements and of the machining operations, programmed according to a predetermined machining program of said workpiece.

3. Multifunction robotized machine for the machining on annular edges according to any of the previous claims **characterised in that** it includes 4 axial borehole tools (20), 4 radial borehole tools (21) and at least one cutting tool (19).

## Patentansprüche

1. Robotisierte Multifunktionsmaschine zur Bearbeitung ringförmiger Ränder durch Werkzeuge, die von Werkzeughaltern getragen werden, mit einem Sockel (2), der auf dem Oberteil erste Führungsmittel (13) umfasst, die die Bewegung mindestens einer Auflage (3) in einer ersten Richtung (29) auf einer zu dem Sockel waagrechten Ebene (2) führen, jede der Auflagen (3) umfasst entsprechende Antriebsmittel (27) der Auflage, wobei das Antriebsmittel jeder Auflage unabhängig von dem Antriebsmittel der anderen Auflagen ist, jede der Auflagen (3) umfasst auf dem Oberteil zweite Führungsmittel (12), die die Bewegung eines senkrechten Turms (4) in einer zweiten Richtung (30) auf einer zu dem Sockel waagrechten Ebene (2) führen, wobei die zweite Richtung rechtwinklig zur ersten Richtung ist, wobei jeder der senkrechten Türme (4) Antriebsmittel (28) des Turmes umfasst, wobei das Antriebsmittel jedes Turms unabhängig von dem Antriebsmittel der anderen Türme ist, jeder senkrechte Turm (4) umfasst, frontal in Bezug auf ein Werkstück (10), senkrechte Führungsmittel (11), die die Bewegung mindestens einer Armhalteplatte (5) führen, jede Armhalteplatte (5) umfasst Antriebsmittel (16) der Armhalteplatte, wobei das Antriebsmittel jeder Armhalteplatte (5) unabhängig von dem Antriebsmittel der anderen Armhalteplatten (5) ist, wobei jede Armhalteplatte (5) einen Werkzeughaltearm (6) trägt, der einen Unterarm (8), einstückig mit besagter Armhalteplatte (5), umfasst und einen Kopf (9), der von besagtem Unterarm (8) getragen wird, wobei der Kopf (9) in Bezug auf den Unterarm (8) gemäß einer ersten Drehachse (31) drehbar ist, besagter Unterarm (8) umfasst Rotationsmittel (17) des Kopfes, der Kopf (9) trägt einen Werkzeughalter (7), der Werkzeughalter (7) ist in Bezug auf besagten Kopf (9) gemäß einer zweiten Drehachse (32) drehbar, besagte zweite Drehachse (32) ist rechtwinklig zur ersten Drehachse (31), der Kopf (9) umfasst Rotationsmittel (18) des Werkzeughalters, wobei die Baugruppe Unterarm (8), Kopf (9) und Werkzeughalter (7) einen Werkzeughalterarm mit 2 Polachsen bildet, wobei eine Polachse der Rotation des Kopfes (9) in Bezug auf besagten Unterarm (8) entspricht und die andere Polachse der Rotation des Werkzeughalters (7) in Bezug auf besagten Kopf (9), **gekennzeichnet dadurch, dass**:
- es zwei Auflagen (3) gibt, jede davon umfasst entsprechende Antriebsmittel (27) der Auflage, wobei das Antriebsmittel jeder Auflage unabhängig von dem Antriebsmittel der anderen Auflage ist, jede der Auflagen (3) umfasst auf dem Oberteil zweite Führungsmittel (12), die die Bewegung eines senkrechten Turmes (4) führen, wobei das Antriebsmittel eines senkrechten Turms unabhängig von dem Antriebsmittel des anderen senkrechten Turmes ist.
- besagte Maschine Antriebsmittel der Maschine (1) zum Fahren zwischen verschiedenen Arbeitsplätzen umfasst.
- das Antriebsmittel (27) der Auflage und die ersten Führungsmittel (13) ein Zahnstangensystem sind und/oder dadurch, dass das Antriebsmittel (28) des Turmes und die zweiten Führungsmittel (12) ein Zahnstangensystem sind.
- das Antriebsmittel (16) der Armhalteplatte und die senkrechten Führungsmittel (11) ein Zahnstangensystem sind.
der Werkzeughalter (7) eine Ansaugkammer (26) umfasst, die auf der Oberfläche des Werkstücks (10) liegt, bevor ein Werkzeug (24) beginnt, eine entsprechende Bearbeitung auf dem Werkstück (10) auszuführen, der Werkzeughalter (7) ist auf Führungen (25) in Bezug auf besagte Ansaugkammer (26) beweglich, der Kontakt zwischen der Ansaugkammer (26) und der Oberfläche des Werkstücks (10) wird für die ganze Dauer der Bearbeitung aufrechterhalten;
sowie dadurch, dass jeder Werkzeughaltearm (6) auf einer Arbeitsfläche arbeitet, die um einem gewissen Winkel in Bezug auf eine entsprechende Bearbeitungsebene des Werkstücks geneigt ist, besagter Winkel liegt zwischen +/- 90 Grad;
jeder der Türme mehr als eine Armhalteplatte (5) umfasst, von denen jede einen entsprechenden Werkzeughaltearm (6) trägt,
jede der Armhalteplatten (5) auf denselben senkrechten Turm (4) montiert ist und unabhängig von den anderen Armhalteplatten (5), die auf denselben senkrechten Turm (4) montiert sind, beweglich ist;
die Maschine gleichzeitig arbeitende Werkzeuge aufnimmt, wobei besagte gleichzeitig arbeitende Werkzeuge mehr als ein Axialbohrer (20) für axiale Bohrungen (22) und mehr als ein Radialbohrer (21) für radiale Bohrungen (23) sind, sowie mehr als ein Schneidwerkzeug (19) und Schleifkopf;
und Werkstücke in einer geneigten Position in Bezug auf die Maschine in jeder Neigungsebene innerhalb von +/- 90 Grad in Bezug auf die Ebene der Maschine platziert werden können.

2. Robotisierte Multifunktionsmaschine zur Bearbeitung ringförmiger Ränder nach Anspruch 1, **gekennzeichnet dadurch, dass** es mit einem computerisierten numerischen Steuerungssystem mit entsprechendem Programm für die Verwaltung der Bewegungen und Bearbeitungsoperationen verbunden ist, programmiert gemäß einem vorherbestimmten Bearbeitungsprogramm des Werkstücks.

3. Robotisierte Multifunktionsmaschine zur Bearbeitung ringförmiger Ränder nach einem beliebigen der vorherigen Patentansprüche, **gekennzeichnet dadurch, dass** sie 4 Axialbohrer (20) umfasst, 4 Radialbohrer (21) und mindestens ein Schneidewerkzeug (19).

## Revendications

1. Machine robotisée multifonctions destinée à l'usinage de bords annulaires au moyen d'outils portés par des moyens porte-outil, et comprenant un socle (2) comprenant sur la partie supérieure un premier moyen de guidage (13) pouvant guider le déplacement d'au moins une base (3) dans une première direction (29) sur un plan horizontal par rapport au dit socle (2), chacune desdites bases (3) comprenant des moyens d'entraînement correspondants (27) de la base, les moyens d'entraînement de chaque base étant indépendants par rapport aux moyens d'entraînement des autres bases, chacune desdites bases (3) comprenant sur la partie supérieure un second moyen de guidage (12) pouvant guider le mouvement d'une tour verticale (4) dans une deuxième direction (30) sur un plan horizontal par rapport audit socle (2), ladite deuxième direction étant orthogonale par rapport à ladite première direction, où chacune desdites tours verticales (4) comprend des moyens d'entraînement (28) de la tour, les moyens d'entraînement de chaque tour étant indépendants par rapport aux moyens d'entraînement des autres tours, chaque tour verticale (4) comprenant, frontalement par rapport à une pièce à usiner (10), un moyen de guidage vertical (11) pouvant guider le mouvement d'au moins une plaque de support de bras (5), chaque plaque de support de bras (5) comprenant des moyens d'entraînement (16) de la plaque de support de bras, les moyens d'entraînement de chaque plaque de support de bras (5) étant indépendants par rapport aux moyens d'entraînement des autres plaques de support de bras (5), chaque plaque de support de bras (5) portant un bras porte-outil (6), ledit bras porte-outil (6) comprenant un avant-bras (8) intégré dans ladite plaque de support de bras (5) et une tête (9) portée par ledit avant-bras (8), ladite tête (9) étant rotative par rapport audit avant-bras (8) selon un premier axe de rotation (31), ledit avant-bras (8) comprenant des moyens de rotation (17) de la tête, ladite tête (9) portant un porte-outil (7), ledit porte-outil (7) étant rotatif par rapport à ladite tête (9) selon un deuxième axe de rotation (32), ledit deuxième axe de rotation (32) étant orthogonal par rapport audit premier axe de rotation (31), ladite tête (9) comprenant des moyens de rotation (18) du porte-outil, l'ensemble avant-bras (8), tête (9) et porte-outil (7) constituant un bras porte-outil avec 2 axes polaires, un axe polaire correspondant à la rotation de ladite tête (9) par rapport audit avant-bras (8), l'autre axe polaire correspondant à la rotation dudit porte-outil (7) par rapport à ladite tête (9), et **caractérisée en ce que**:
- lesdites bases (3) sont au nombre de deux, chacune desdites bases (3) comprenant des moyens d'entraînement correspondants (27) de la base, les moyens d'entraînement de chaque base étant indépendants par rapport aux moyens d'entraînement de l'autre base, chacune desdites bases (3) comprenant sur la partie supérieure des seconds moyens de guidage (12) pouvant guider le mouvement d'une tour verticale (4), les moyens d'entraînement d'une tour verticale étant indépendants par rapport aux moyens d'entraînement de l'autre tour verticale.
- ladite machine inclut des moyens d'entraînement de ladite machine (1) entre différents postes de travail.
- lesdits moyens d'entraînement (27) de la base et ledit premier moyen de guidage (13) sont un système à crémaillère et/ou **en ce que** les moyens d'entraînement (28) de la tour et ledit deuxième moyen de guidage (12) sont un système à crémaillère.
- lesdits moyens d'entraînement (16) de la plaque de support de bras et lesdits moyens de guidage vertical (11) sont un système à crémaillère.
- ledit porte-outil (7) inclut une chambre d'aspiration (26), ladite chambre d'aspiration reposant sur la surface de la pièce à usiner (10) avant qu'un outil (24) ne commence à usiner ladite pièce (10), le porte-outil (7) étant déplaçable sur des éléments de guidage (25) par rapport à ladite chambre d'aspiration (26), le contact entre ladite chambre d'aspiration (26) et ladite surface de la pièce à usiner (10) étant maintenue pendant toute la durée dudit usinage;
- et **en ce que** chaque bras porte-outil (6) travaille sur un plan de travail incliné à un angle déterminé par rapport à un plan d'usinage correspondant de la pièce à usiner, ledit angle se trouvant entre +/- 90 degrés;
- chacune desdites tours comprend plusieurs de l'une desdites plaques de support de bras (5), dont chacune porte un bras porte-outil (6) correspondant, chacune desdites plaques de support de bras (5) montées sur la même tour verticale (4) étant indépendamment déplaçable par rapport aux autres plaques de support de bras (5) montées sur la même tour verticale (4);
- la machine héberge des outils fonctionnant simultanément, lesdits outils fonctionnant simultanément étant plusieurs de l'un des outils de perforation axiale (20) destinés à effectuer des trous axiaux (22) et plusieurs de l'un des outils de perforation radiale (21) destinés à effectuer des trous radiaux (23), en plus des outils de coupe (19) et de la tête de galets;
- et les pièces à usiner peuvent être placées dans une position inclinée par rapport à la machine selon n'importe quel plan d'inclinaison compris entre +/- 90 degrés par rapport au plan de la machine.

2. Machine robotisée multifonctions destinée à l'usinage de bords annulaires selon la revendication 1, **caractérisée en ce qu'**elle est associée à un système de contrôle numérique informatisé avec un programme correspondant pour la gestion des mouvements et des opérations d'usinage, programmée conformément à un programme d'usinage prédéterminé de ladite pièce à usiner.

3. Machine robotisée multifonctions destinée à l'usinage de bords annulaires selon l'une quelconque des revendications précédentes, **caractérisée en ce qu'**elle inclut 4 outils de perforation axiale (20), 4 outils de perforation radiale (21) et au moins un outil de coupe (19).
